(19) Europäisches Patentamt
European Patent Office
Office européen des brevets

(11) **EP 4 307 586 A2**

(12) **EUROPEAN PATENT APPLICATION**

(43) Date of publication:
**17.01.2024 Bulletin 2024/03**

(51) International Patent Classification (IPC):
**H04L 1/06** (2006.01)

(21) Application number: **23214351.1**

(22) Date of filing: **02.08.2011**

(52) Cooperative Patent Classification (CPC):
**H04L 1/0073; H04L 1/08; H04L 1/1858; H04W 72/21;** H04L 1/06; H04L 1/1671; H04L 2001/125

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.08.2010 CN 201010243090**

(62) Document number(s) of the earlier application(s) in accordance with Art. 76 EPC:
**11814099.5 / 2 602 950**

(71) Applicant: **Datang Mobile Communications Equipment Co., Ltd.**
**Beijing 100085 (CN)**

(72) Inventors:
• **CHEN, Wenhong**
  **Beijing, 100191 (CN)**
• **LIN, Ya'nan**
  **Beijing, 100191 (CN)**
• **GAO, Xuejuan**
  **Beijing, 100191 (CN)**

(74) Representative: **Studio Torta S.p.A.**
**Via Viotti, 9**
**10121 Torino (IT)**

Remarks:
This application was filed on 05-12-2023 as a divisional application to the application mentioned under INID code 62.

(54) **METHOD AND APPARATUS FOR PROCESSING UCI BASED ON MIMO SYSTEM, AND METHOD FOR TRANSMITTING UCI BASED ON MIMO SYSTEM**

(57)    The present invention provides a method and apparatus for processing uplink control information (UCI) and a method for transmitting the UCI based on a multiple input multiple output system. The processing method includes: replicating ACK/NACK source bits and/or rank indicator (RI) source bits in the uplink control information to get M groups of the ACK/NACK source bits and/or RI source bits, with each group in the M groups corresponding to a codeword (S302), where M is a total number of codewords; performing channel coding on the ACK/NACK source bits and/or RI source bits of each codeword to obtain $Q_{ACK}*L_i$ output bits (S304), where $Q_{ACK}$ is channel coding output bits corresponding to each layer in a certain codeword, L is a total number of layers of the codewords, and the layer number corresponding to the i-th codeword is Li; and multiplexing and interleaving the output bits and the data bits of the corresponding codeword (S306). The present invention solves the problems of transmission and channel coding of the ACK/NACK and/or RI in the multiple input multiple output (MIMO) system, and at the same time takes into account high load situations and backward compatibility.

Figure 3

**Description**

**Field of the present invention**

The embodiments of the present invention relates to the field of communication technology, in particular to a method and apparatus for processing uplink control information (UCI) based on a multiple input multiple output (MIMO) system, and a method for transmitting the UCI based on the MIMO system.

**Background of the present invention**

In an LTE-A system, the transmission of uplink control information (UCI) in a PUSCH (Physical Uplink Shared Channel) should take multi-carrier transmission and MIMO (Multiple Input Multiple Output) transmission into consideration. To obtain the most diversity gains, it is necessary to transmit ACK and RI on all transmission layers by replication and take high load caused by multi-carrier into account at the same time. Single-codeword and single-layer transmission is only supported in current standards and ACK/NACK and/or RI are transmitted in a small amount. How to transmit ACK/NACK and/or RI (Rank Indicator) on multi-codeword and multi-layer by replication and how to do channel coding should be further clarified.

Uplink control information includes ACK/NACK feedback information, periodical/non-periodical channel state information (CSI) (including CQI (Channel Quality Indicator) information/PMI (Precoding Matrix Indicator) and RI information). In an LTE R8 system, UCI can be transmitted on a PUCCH (Physical Uplink Control Channel) or be transmitted by multiplexing with the data on a PUSCH.

Non-periodical reporting of CQI/PMI/RI information is transmitted on a PUSCH. For the condition that a number of CQI/PMI/RI feedback bits is no more than 11, a RM (32, O) block code is adopted for coding the transmitting data during channel coding firstly and then corresponding transmission resource sizes of CQI/PMI/RI are realized through repetition/truncation coding, where O refers to a bit number of original input information, and the RM (32, O) block code in an LTE Rel-8 system can support 11-bit original input information at most. For the condition that the bit number of CQI/PMI/RI feedback bits is greater than 11, a tail-biting convolutional code is adopted for coding channels. While periodical reporting of CQI/PMI/RI information is transmitted on PUCCH format 2/2a/2b channels in accordace with the preconfigured reporting cycle, and a RM (20, A) block code is adopted for coding channels of the transmission data, where A means a bit number of the original input information, and the RM (20, A) block code in the LTE Rel-8 system can support 13-bit original input information at most.

ACK/NACK feedback information can be transmitted on a PUCCH or PUSCH according to specific scheduling. 4-bit ACK/NACK information is supported at most in the Rel-8 system. When ACK/NACK information is transmitted in PUCCH format1/1a/1b, channel coding will not be performed. When ACK/NACK information is transmitted by multiplexing with the data on the PUSCH, 1-bit or 2-bit ACK/NACK information is coded by replication as a channel code. The channel code of more than 2-bit ACK/NACK information, is as same as the channel code of non-periodic CQI/PMI/RI transmission, by combining a RM (32, O) block code and repetition/truncation code.

To be compatible with an LTE system, an LTE-A system supports the transmission of UCI on a PUCCH and/or PUSCH. LTE-A can support five(5) carriers at most to aggregate at present, that is to say, in the same uplink subframe, a UE should feed back multi-bit UCI corresponding to a plurality of downlink subframes. Taking ACK/NACK feedback information as an example, it is necessary for an FDD system to feed back 10-bit ACK/NACK information at most and for a TDD system to feed back 40-bit ACK/NACK information at most. To support the transmission on a PUSCH with more information bits, the current LTE channel coding schemes should be extended. In the LTE system, when selecting a channel coding scheme of CQI, it has verified that the RM (Reed-Muller) block code has much better performance, the coding and decoding are simple, and it is unnecessary to define a codeword set seperately for the input information with different lengths. Compared with a RM code, a convolutional code has a poor performance, especially when the original information with a short length is input. However, for the LTE-A system, when a receiving terminal adopts maximum likelihood (ML) for coding, exponential growth will exist between the decoding complexity of a RM block code and the length of coding original information. For a convolutional code, Viterbi decoding algorithm is used as the optimal ML decoding algorithm, and linear growth will exist between decoding complexity and the length of coding original information. Therefore, in the LTE-A, UCI should select a channel coding scheme with schemerate performance and decoding complexity in accordance with a size of information bits.

On the other hand, it is necessary to support four-layer spatial multiplexing transmission of two codewords at most in LTE-A. How to transmit UCI on a plurality of layers should also be resolved. As shown in the conclusion of the meeting at present, CQI is multiplexed in a codeword, while ACK/NACK and/or RI are transmitted by replication on all codewords to obtain diversity gains. For ACK/NACK and/or RI transmission, the number of symbols occupied on each layer is calculated in accordance with the following formula and current standards are expanded to a certain degree:

$$Q' = \min\left\{ \left[ \frac{O \cdot M_{sc}^{PUSCH-initial} \cdot N_{symb}^{PUSCH-initial} \cdot \beta_{offset}^{PUSCH}}{\sum_{r=0}^{C^{(0)}-1} K_r^{(0)} + \sum_{r=0}^{C^{(1)}-1} K_r^{(1)}} \right], 4 \cdot M_{sc}^{PUSCH} \right\}$$

Thus channel coding output bit of ACK/NACK and/or RI, $Q_{ACK}$ is equal to $Q'^*Q_m$. How to determine $\beta_{offset}^{PUSCH}$ is not yet concluded. The same value can be used for all codewords or different values are adopted for different codewords or even for different layers, at this time the number of UCI symbols obtained of each codeword/layer will be different. Different data modulation methods may be used for each codeword/layer, thus how to replicate information bits and conduct channel coding and modulation on different codewords should be standardized.

Two technologies can support multi-codeword and multi-layer UCI transmission at present.

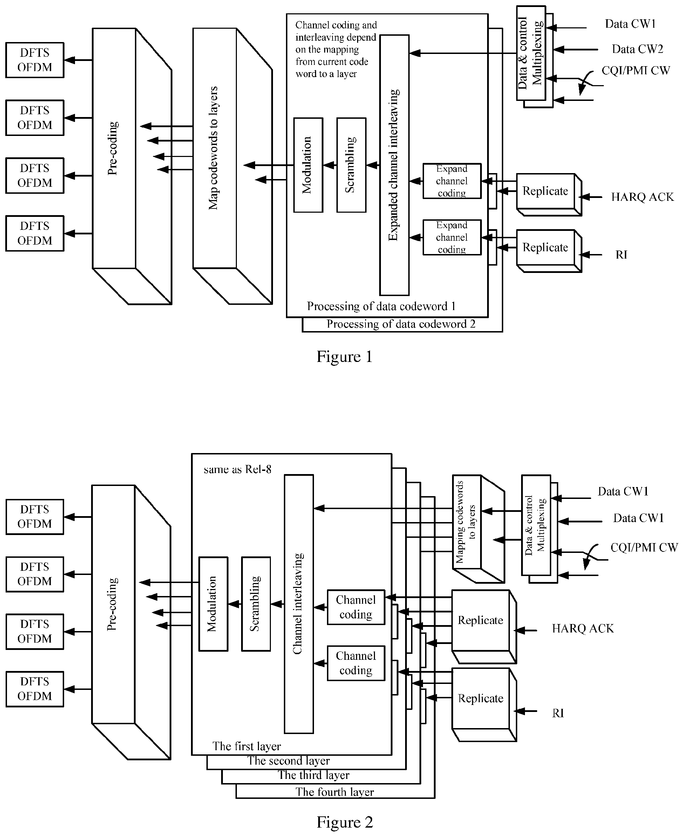

Figure 1 is a schematic diagram of UCI transmission of independent coding of each codeword. As shown in Scheme I of Figure 1, channel coding for UCI of each codeword is perfromed independently, and then channel interleaving, scrambling and modulation are conducted for UCI and data together. During channel coding, the codeword is replicated according to a number of the mapped layers and modulation methods, so as to ensure that the information transmitted on a plurality of the mapped layers is the same.

Figure 2 is a schematic diagram of UCI transmission of independent coding of each layer. As shown in Scheme II of Figure 2, firstly layer mapping is performed for the data and CQI to obtain data bits of each layer, and the UCI is processed on each layer independently (the process is the same as the one conducted in accordance with current standards), then the UCI and the data are megered. Different number of information bits or information symbols can be used on each layer.

As for Scheme I, replication in a codeword is conducted after channel coding and a modulation method is required, thus coding process is complicated. As for Scheme II, channel coding, interleaving, scrambling, modulation and other processes are performed on each layer independently, thus processing complexity is increased (it is only necessary for a codeword to be subject to this process as shwon in Scheme I). The common disadvantage of the two schemes means that no high information bit load (for example, information source of greater than 11 bits) is supported for the re-used R8 coding method.

## Summary of the Invention

For one or a plurality of problems in relevant technologies, the present invention aims to provide a method and an apparatus for processing uplink control information (UCI) based on a multiple input multiple output (MIMO) system, and a method for transmitting the UCI based on the MIMO system, so as to at least resolve one of the above problems.

A method for processing UCI based on a MIMO system is provided according to the embodiments of the present invention, which includes: replicating ACK/NACK source bits and/or RI source bits in the uplink control information to get M groups of the ACK/NACK source bits and/or RI source bits, with each group in the M groups corresponding to a codeword, where M refers to a total number of codewords; performing channel coding on the ACK/NACK source bits and/or RI source bits of each codeword in the codewords to obtain $Q_{ACK}^*L_i$ output bits, where $Q_{ACK}$ is channel coding output bits corresponding to each layer in a certain codeword, L is a total number of layers of the codewords, and the layer number corresponding to the $i^{th}$ codeword is $L_i$; and multiplexing and interleaving the output bits corresponding to each codeword in the codewords and data bits of the corresponding codeword.

A method for transmitting UCI adopting the method for processing the UCI is provided according to the embodiments of the present invention.

The method for processing UCI based on a MIMO system is provided according to the embodiments of the present invention. The method includes: replicating ACK/NACK source bits and/or RI source bits to get L groups of the ACK/NACK source bits and/or RI source bits, with each group in the L groups corresponding to a layer, where L is a total number of layers corresponding to the L groups of source bits; performing channel coding on the ACK/NACK source bits and/or RI source bits of each layer in the layers to obtain $Q_{ACK}$ output bits; and multiplexing and interleaving the output bits corresponding to each layer in the layers and data bits of the corresponding layer.

The method for transmitting UCI adopting the method for processing uplink control information is provided according to the embodiments of the present invention.

An apparatus for processing UCI based on a MIMO system is provided according to the embodiments of the present invention. The apparatus includes: a replication module, for replicating ACK/NACK source bits and/or RI source bits in the uplink control information to get M groups of the ACK/NACK source bits and/or RI source bits, with each group in the M groups corresponding to a codeword, where M is a total number of codewords and M is a positive integer; a channel coding module, for performing channel coding on the ACK/NACK source bits and/or RI source bits of each codeword in the codewords to obtain $Q_{ACK}*L_i$ output bits, where $Q_{ACK}$ is channel coding output bits corresponding to each layer in a certain codeword, L is a total number of layers of the codewords, and the layer number corresponding to the i$^{th}$ codeword is $L_i$; and a processing module, for multiplexing and interleaving the output bits corresponding to each codeword in the codewords and data bits of the corresponding codeword.

The apparatus for processing UCI based on a MIMO system is provided according to the embodiments of the present invention. The apparatus includes: a replication module, for replicating ACK/NACK source bits and/or RI source bits to get L groups of the ACK/NACK source bits and/or RI source bits, with each group in the L groups corresponding to a layer, where L is a total number of layers corresponding to the L groups of source bits; a channel coding module, for performing channel coding on the ACK/NACK source bits and/or RI source bits of each layer in the layers to obtain $Q_{ACK}$ output bits; and a processing module, for multiplexing and interleaving the output bits corresponding to each layer in the layers and data bits of the corresponding layer.

The present invention provides a method for transmitting UCI in a PUSCH, which solves the problems of transmission and channel coding of the ACK/NACK and/or RI in the multiple input multiple output (MIMO) system, and at the same time takes into account high load situations and backward compatibility.

**Brief description of the drawings**

Figure 1 is a schematic diagram of UCI transmission by independently coding of each codeword;

Figure 2 is another schematic diagram of UCI transmission by independently coding of each layer;

Figure 3 is a flow chart illustrating a method for processing UCI based on a MIMO system according to the embodiments of the present invention;

Figure 4 is another flow chart illustrating a method for processing UCI based on a MIMO system according to the embodiments of the present invention;

Figure 5 is a block diagram illustrating an apparatus for processing UCI based on a MIMO system according to the embodiments of the present invention; and

Figure 6 is another block diagram illustrating an apparatus for processing UCI based on a MIMO system according to the embodiments of the present invention.

**Detailed description of the embodiments of the present invention**

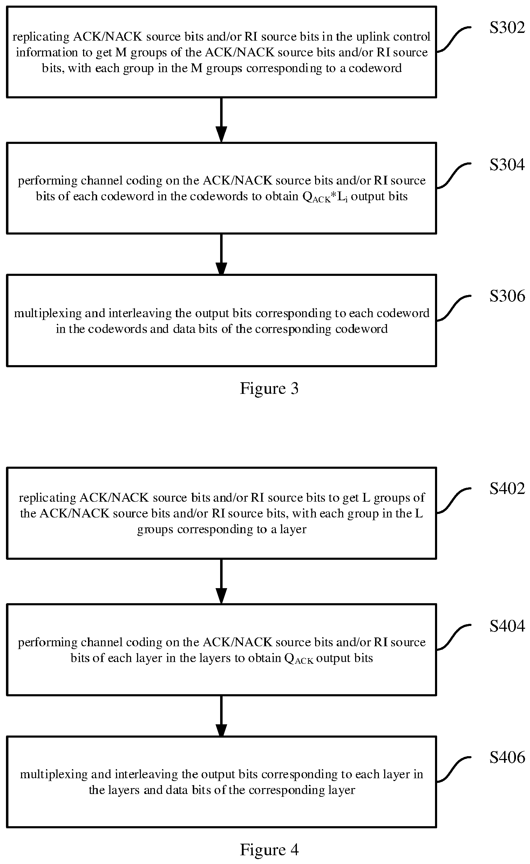

The method for processing UCI based on a MIMO system according to the embodiments of the present invention is shown in Figure 3, which includes:

Step S302: replicating ACK/NACK source bits and/or rank indicator (RI) source bits in the uplink control information to get M groups of the ACK/NACK source bits and/or RI source bits, with each group in the M groups corresponding to a codeword, where M is a total number of codewords;

Step S304: performing channel coding on the ACK/NACK source bits and/or RI source bits of each codeword in the codewords to obtain $Q_{ACK}*L_i$ output bits, where $Q_{ACK}$ is channel coding output bits corresponding to each layer in a certain codeword, L is a total number of layers of the codewords, and the layer number corresponding to the i$^{th}$ codeword is $L_i$; and

Step S306: multiplexing and interleaving the output bits corresponding to each codeword in the codewords and data bits of the corresponding codeword.

Herein, a certain coding scheme is determined in accordance with the bit number of the ACK/NACK source bits and/or RI source bits of each codeword in the codewords; and the ACK/NACK source bits and/or RI source bits are coded in accordance with the determined coding scheme.

If the bit number of the ACK/NACK source bits and/or RI source bits is smaller than A, such source bits are coded by replication after one or more placeholder bits are inserted to obtain $Q_{ACK}$ output bits. If the bit number of the ACK/NACK source bits and/or RI source bits is greater than or equal to A and smaller than or equal to B, a RM (32, O) code is adopted for doing the channel coding. If $Q_{ACK}>32$, the coded bits are replicated in cycle to obtain $Q_{ACK}$ output bits. And if the bit number of the ACK/NACK source bits and/or RI source bits is greater than B, an RM (32, O) code is adopted for the grouped source bits for doing the channel coding to obtain $Q_{ACK}$ output bits, where A<B, and both A and B are positive integers.

The $Q_{ACK}$ output bits are replicated according to the layer number $L_i$ mapped by a current codeword to obtain output bits corresponding to all layers in the current codeword.

If data modulation scheme in the current codeword is $Q_m$, the output bits are replicated by taking $Q_m$ bits as a unit; or $Q_{ACK}$ output bits are replicated directly without reference to data modulation scheme in the current codeword.

If the bit number of the ACK/NACK source bits and/or RI source bits is smaller than A, such source bits are coded by replication after one or more placeholder bits are inserted to obtain $Q_{ACK}*L_i$ output bits. If the bit number of the ACK/NACK source bits and/or RI source bits is greater than or equal to A and smaller than or equal to B, a RM (32, O) code is adopted for doing the channel coding. If $Q_{ACK}*L_i >32$, the coded bits are replicated in cycle to obtain $Q_{ACK}*L_i$ output bits. And if the bit number of the ACK/NACK source bits and/or RI source bits is greater than B, an RM (32, O) code is adopted for the grouped source bits for doing the channel coding to obtain $Q_{ACK}*L_i$ output bits, where A<B, both A and B are positive integers.

Specifically, A=3, and B=10 or 11.

The embodiments of the present invention also provide a method for transmitting uplink control information (UCI) adopting the method for processing the UCI.

A method for processing UCI based on a MIMO system according to the embodiments of the present invention is shown in Figure 4, which includes:

Step 402: replicating ACK/NACK source bits and/or RI source bits to get L groups of the ACK/NACK source bits and/or RI source bits, with each group in the L groups corresponding to a layer, where L is a total number of layers;

Step 404: performing channel coding on the ACK/NACK source bits and/or RI source bits of each layer in the layers to obtain $Q_{ACK}$ output bits; and

Step 406: multiplexing and interleaving the output bits corresponding to each layer in the layers and data bits of the corresponding layer.

Herein, a certain coding scheme is determined in accordance with the bit number of ACK/NACK source bits and/or RI source bits of each codeword in the codewords; and the ACK/NACK source bits and/or RI source bits are coded in accordance with the determined coding scheme.

If the bit number of the ACK/NACK source bits and/or RI source bits is smaller than A, such source bits are coded by replication after one or more placeholder bits are inserted to obtain $Q_{ACK}$ output bits. If the bit number of the ACK/NACK source bits and/or RI source bits is greater than or equal to A and smaller than or equal to B, a RM (32, O) code is adopted for doing the channel coding. If $Q_{ACK}>32$, then the coded bits are replicated in cycle to obtain $Q_{ACK}$ output bits. And if the bit number of the ACK/NACK source bits and/or RI source bits is greater than B, an RM (32, O) code is adopted for the grouped source bits for doing the channel coding to obtain $Q_{ACK}$ output bits, where A<B, both A and B are positive integers.

Specifically, A=3, and B=10 or 11.

The embodiments of the present invention also provide a method for transmitting UCI adopting the method for processing the UCI.

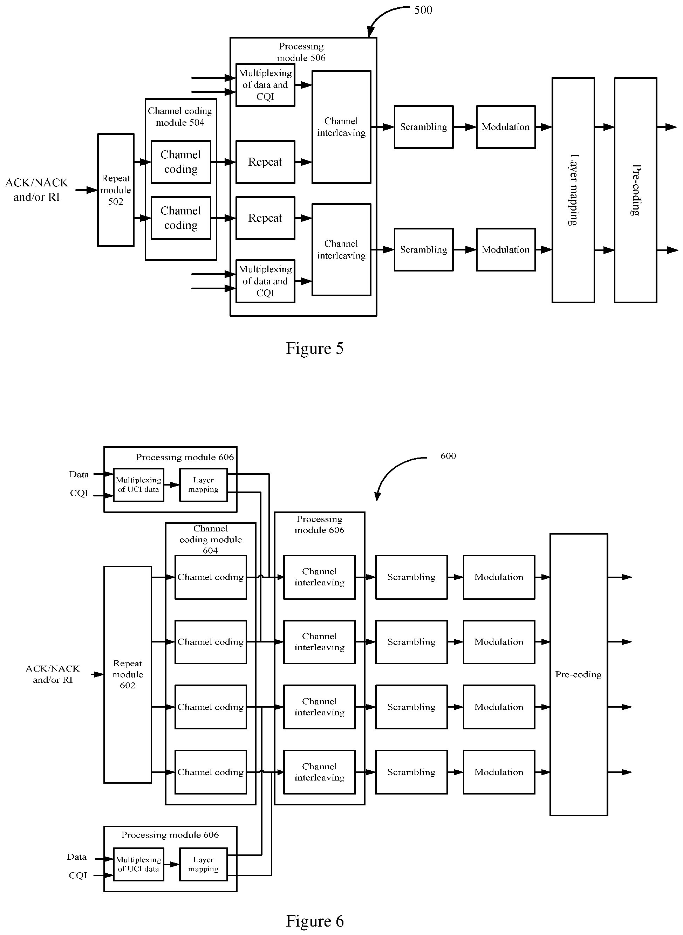

An apparatus for processing UCI based on a multiple input multiple output system according to the embodiments of the present invention is shown in Figure 5. Two-codeword trnasmission is only shown and for explanation, however, the present invention includes but not limited to the two codewords. If there is only one codeword, there will be only one signal. The dotted-line box in Figure 5 represents possible processes.

The apparatus 500 includes: a replication module 502, for replicating ACK/NACK source bits and/or RI source bits in the uplink control information to get M groups of the ACK/NACK source bits and/or RI source bits, with each group in the M groups corresponding to a codeword, where M is a total number of codewords and M is a positive integer; a channel coding module 504, for performing channel coding on the ACK/NACK source bits and/or RI source bits of each codeword in the codewords to obtain $Q_{ACK}*L_i$ output bits, where $Q_{ACK}$ is channel coding output bits corresponding to each layer in a certain codeword, L is a total number of layers of the codewords, and the layer number corresponding to the $i^{th}$ codeword is $L_i$; and a processing module 506, for multiplexing and interleaving the output bits corresponding to each codeword in the codewords and data bits of the corresponding codeword.

The channel coding module 504 may include: a module for determining a certain coding scheme in accordance with the bit number of ACK/NACK source bits and/or RI source bits of each codeword in the codewords; and a coding module, for coding the ACK/NACK source bits and/or RI source bits in accordance with the determined coding scheme.

If the bit number of the ACK/NACK source bits and/or RI source bits is smaller than A, such source bits are coded by replication after one or more placeholder bits are inserted to obtain $Q_{ACK}$ output bits. If the bit number of the ACK/NACK source bits and/or RI source bits is greater than or equal to A and smaller than or equal to B, a RM (32, O) code is adopted for doing the channel coding. If $Q_{ACK}>32$, the coded bits are replicated in cycle to obtain $Q_{ACK}$ output bits. And if the bit number of the ACK/NACK source bits and/or RI source bits is greater than B, a RM (32, O) code is adopted for the grouped source bits for doing the channel coding to obtain $Q_{ACK}$ output bits; where A<B, both A and B are positive integers.

Specifically, the channel coding module 504 replicates the $Q_{ACK}$ output bits in accordance with the layer number $L_i$ mapped by a current codeword to obtain output bits corresponding to all layers in the current codeword.

If data modulation scheme in the current codeword is $Q_m$, the channel coding module 504 replicates the output bits by taking $Q_m$ bits as a unit; or replicates the $Q_{ACK}$ output bits directly without reference to data modulation scheme in the current codeword.

If the bit number of the ACK/NACK source bits and/or RI source bits is smaller than A, the channel coding module 504 encodes such source bits by replication after one or more placeholder bits are inserted to obtain $Q_{ACK}*L_i$ output bits. If the bit number of the ACK/NACK source bits and/or RI source bits is greater than or equal to A and smaller than or equal to B, the channel coding module 504 adopts a RM (32, O) code to do channel coding, and if $Q_{ACK}*L_i>32$, the coded bits are replicated in cycle to obtain $Q_{ACK}*L_i$ output bits. And if the bit number of the ACK/NACK source bits and/or RI source bits is greater than B, the channel coding module 504 adopts an RM (32, O) code for the grouped source bits for doing the channel coding to obtain $Q_{ACK}*L_i$ output bits, where A<B, both A and B are positive integers .

Specifically, A=3, and B=10 or 11.

An apparatus for processing UCI based on a MIMO system according to the embodiments of the present invention is shown in Figure 6.

Four-layer transmission is only shown in Figure 6. If L<4, there is only L signals. However, this is only schematic and can be used to transmit for other different number of layers.

The apparatus 600 includes: a replication module 602, for replicating ACK/NACK source bits and/or RI source bits to get L groups of the ACK/NACK source bits and/or RI source bits, with each group in the L groups corresponding to a layer, where L is a total number of layers corresponding to the L groups of source bits; a channel coding module 604, for performing channel coding on the ACK/NACK source bits and/or RI source bits of each layer in the layers to obtain $Q_{ACK}$ output bits; and a processing module 606, for multiplexing and interleaving the output bits corresponding to each layer in the layers and data bits of the corresponding layer.

The channel coding module 604 may include: a module for determining a certain coding scheme in coding schemes in accordance with the bit number of ACK/NACK source bits and/or RI source bits of each codeword in the codewords; and a coding module, for coding the ACK/NACK source bits and/or RI source bits in accordance with the determined coding scheme.

If the bit number of the ACK/NACK source bits and/or RI source bits is smaller than A, the channel coding module encodes such source bits by replication after one or more placeholder bits are inserted to obtain $Q_{ACK}$ output bits. If the bit number of the ACK/NACK source bits and/or RI source bits is greater than or equal to A and smaller than or equal to B, the channel coding module adopts an RM (32, O) code to do the channel coding. If $Q_{ACK}>32$, then the coded bits are replicated in cycle to obtain $Q_{ACK}$ output bits. And if the bit number of the ACK/NACK source bits and/or RI source bits is greater than B, an RM (32, O) code is adopted for the grouped source bits for doing the channel coding to obtain $Q_{ACK}$ output bits, where A<B, both A and B are positive integers.

Specifically, A=3, and B=10 or 11.

Specifically, the method for processing and transmitting UCI can be used for a MIMO+CA system in the LTE-A. Suppose that the bit number of ACK/NACK source bits and/or RI source bits is O, the channel coding output bit corresponding to each layer in a certain codeword is $Q_{ACK}$ ($Q_{ACK}$ of each codeword may be different), a total number of codewords of PUSCH is M, a total number of layers is L, and the layer number corresponding to the $i^{th}$ codeword is $L_i$.

**Scheme 1: Processing each codeword independently**

1. replicating ACK/NACK source bits and/or RI source bits to get M groups of the ACK/NACK source bits and/or RI source bits, with each group in the M groups corresponding to a codeword;

2. performing channel coding on the ACK/NACK source bits and/or RI source bits of each codeword in the codewords to obtain $Q_{ACK}*L_i$ output bits, which can be realized with two methods, including:

Method 1: obtaining $Q_{ACK}$ output bits with one of the following ways, including:

1) if the bit number of source bits is smaller than A, such source bits are coded by replication after one or more placeholder bits are inserted (the R8 coding scheme is available).

2) if the bit number of the ACK/NACK source bits and/or RI source bits is greater than or equal to A and smaller than or equal to B, a RM (32, O) code is adopted for doing the channel coding. If $Q_{ACK}>32$, then the coded bits are replicated in cycle to obtain $Q_{ACK}$ output bits (the R8 coding scheme is available).

3) if the bit number of source bits is greater than B, an RM (32, O) code is adapted for the grouped source bits for doing the channel coding to obtain $Q_{ACK}$ output bits, and then the obtained $Q_{ACK}$ output bits are outputted.

Herein, A<B, and typical values are A=3 and B=10 or 11.
Secondly, replicating output bits in accordance with the layer number $L_i$ mapped by a current codeword to obtain output bits corresponding to all layers in the current codeword. The replicating process can be realized with two methods, namely Method a and Method b as below (if only one layer is mapped, it is unnecessary to conduct the replicating process).

Method a: if data modulation scheme in the current codeword is $Q_m$, replicating the output bits by taking $Q_m$ bits as a unit; and
Method b: replicating $Q_{ACK}$ output bits directly without reference to data modulation scheme in the current codeword.

Method 2: obtaining $Q_{ACK}*L_i$ output bits with one of the following ways, including:

1) if the bit number of the source bits is smaller than A, such source bits are coded by replication after one or more placeholder bits are inserted to obtain $Q_{ACK}*L_i$ output bits.

2) if the bit number of source bits is greater than or equal to A and smaller than or equal to B, a RM (32, O) code is adopted for doing the channel coding, and if $Q_{ACK}*L_i >32$, the coded bits are replicated in cycle to obtain $Q_{ACK}*L_i$ output bits.

3) if the bit number of source bits is greater than B, an RM code is adopted for the grouped source bits for doing the channel coding to obtain $Q_{ACK}*L_i$ output bits, and the obtained $Q_{ACK}*L_i$ output bits are outputted directly.

Herein, A<B, and typical values are A=3 and B=10 or 11.
3. Multiplexing and interleaving the output bits corresponding to each codeword in the codewords and data bits of the corresponding codeword.

**Scheme 2: Processing each layer independently**

1. replicating ACK/NACK source bits and/or RI source bits to get L groups of the ACK/NACK source bits and/or RI source bits, with each group in the L groups corresponding to a layer;

2. performing channel coding on the ACK/NACK source bits and/or RI source bits of each layer in the layers to obtain $Q_{ACK}$ output bits ($Q_{ACK}$ of each layer may be different);

1) if the bit number of source bits is smaller than A, such source bits are coded by replication after one or more placeholder bits are inserted (the R8 coding scheme is available).

2) if the bit number of source bits is greater than or equal to A and smaller than or equal to B, a RM (32, O) code is adopted for doing the channel coding; and if $Q_{ACK}>32$, then the coded bits are replicated in cycle to obtain $Q_{ACK}$ output bits (the R8 coding scheme is available).

3) if the bit number of source bits is greater than B, an RM (32, O) code is adopted for the grouped source bits for doing the channel coding to obtain $Q_{ACK}$ output bits, and then the obtained $Q_{ACK}$ output bits are outputted. Herein, A<B, and typical values are A=3 and B=10 or 11.

3. multiplexing and interleaving the output bits corresponding to each layer in the layers and data bits of the corresponding layer.

**The first Embodiment (corresponding to Scheme 1 and Method 1):**

Supposing that there are O=10 bits of ACK/NACK source bits and/or RI source bits $o_n^{ACK}$ , 3-layer PUSCH data transmission of M=2 codewords in total (one layer for the first codeword and two layers for the second codeword), the sequence of coded output bits is $q_i^{ACK}$ (the length of output bits on each layer of two codewords, $Q_{ACK}$ is 40 and 30 respectively), the processing steps are as follows:

1. replicating source bits to form two groups, with each group referring to $o_n^{ACK}$ , used for ACK/NACK transmission and/or RI transmission on two codewords respectively.

2. performing channel coding on each codeword (for the lengh is greater than 2 and smaller than 11, an RM code is adopted):

$$q_i^{ACK} = \sum_{n=0}^{O-1} \left( o_n^{ACK} \cdot M_{(i \bmod 32),n} \right) \bmod 2 \quad , \quad i = 0, 1, 2, ..., QACK-1$$

where $M_{i,n}$ represent a basic sequence of RM codes.

3. replicating output bits. It is unnecessary to replicate the first codeword (with the length of $Q^0_{ACK}$=40 ) and necessary to replicate the second codeword once so as to obtain output bits corresponding to two layers, which can be realized with two ways (the length is $Q^1_{ACK}$ *2=60):

a) supposing that modulation method is QPSK, namely $Q_m$=2, then:

$$Q_{out}^{ACK} = q_0^{ACK} q_1^{ACK} \mathbf{q}_0^{ACK} \mathbf{q}_1^{ACK} q_2^{ACK} q_3^{ACK} \mathbf{q}_2^{ACK} \mathbf{q}_3^{ACK} ......$$

b) replicating the whole sequence directly, then:

$$Q_{out}^{ACK} = q_0^{ACK} q_1^{ACK} q_2^{ACK} q_3^{ACK} ...... q_0^{ACK} q_1^{ACK} q_2^{ACK} q_3^{ACK} ......$$

4. multiplexing and interleaving the output bits of two codes and the data of each codeword.

**The Second Embodiment (corresponding to Scheme 1 and Method 2):**

Supposing that there are O=15 bits of ACK/NACK source bits and/or RI source bits , $o_n^{ACK}$ , 3-layer PUSCH data transmission of M=2 codewords in total (one layer for the first codeword and two layers for the second codeword), the sequence of coded output bits is

$$q_i^{ACK}$$

(the length of output bits on each layer of two codewords, $Q_{ACK}$ is 40 and 30 respectively), the processing steps are as follows:

1. replicating source bits to form two groups, with each group referring to $o_n^{ACK}$, used for ACK/NACK transmission and/or RI transmission on two codewords respectively.

2. performing channel coding on each codeword (for the lengh is greater than 11, RM (32, O) code is adopted): Herein, after grouping the first code, RM (32, 8) code and RM (32, 7) code are adopted to code channel respectively for the two different groups, and after truncateing, the length of output bits is $Q^O_{ACK}$=40.

After grouping the second code, RM (32, 8) code and RM (32, 7) code are adopted to code channel respectively for the two different groups (60, 15), and after truncateing, the length of output bits is $Q^1_{ACK}$ *2=60.
3. multiplexing and interleaving the output bits of two codes and the data of each codeword.

**The Third Embodiment (corresponding to Scheme 2):**

Supposing that there are O=10-bit of ACK/NACK source bits and/or RI source bits, $O_n^{ACK}$, L=3-layer PUSCH data transmission of M=2 codewords in total (one layer for the first codeword and two layers for the second codeword), the sequence of coded output bits is

$$q_i^{ACK}$$

(the length of 3-layer output bits $Q_{ACK}$ is 40, 30 and 30 for each layer respectively), the processing steps are as follows:

1. replicating source bits to form three groups, with each group referring to $O_n^{ACK}$, used for ACK/NACK transmission and/or RI transmission on three layers respectively.
2. performing channel coding on each layer (for the lengh is greater than 3 and smaller than 11, an RM code is adopted):

$$q_i^{ACK} = \sum_{n=0}^{O-1} \left( o_n^{ACK} \cdot M_{(i \bmod 32),n} \right) \bmod 2 \quad , \ i = 0, 1, 2, ..., QACK\text{-}1$$

Then the number of output bits of three layers after channel coding is $Q_{ACK,0}$=40, $Q_{ACK,1}$=30 and $Q_{ACK,\cdot 2}$=30 respectively.
3. multiplexing and interleaving the 3-layer output bits and the data of each layer.

The present invention can be applied widely, including any number of antennas and antenna array, any duplexing systems (TTD system or FDD system), and any uplink transmission under sending scheme (such as SU-MIMO, MU-MIMO and CoMP).
The present invention solves the problem of transmission and channel coding of ACK/NACK and/or RI in MIMO system and takes into account high load situations and backward compatibility.
The present invention has one or more advantages of the following beneficial technical effects, including:

(1) simple processing and a small amount of calculation;
(2) being capable of supporting high-information-bit load; and
(3) being capable of obtaining more coding gains.

What is mentioned above is only the preferred embodiments and will not restrict the present invention. For those skilled in the art, various modifications and changes can be shown in the present invention. Any modification, substitution, improvement, etc. within the spirit and principle of the present invention shall be included in the protective scope of the present invention.

**Claims**

1. A method for processing uplink control information (UCI) based on a multiple input multiple output (MIMO) system, which is **characterized by** comprising:

   replicating ACK/NACK source bits and/or rank indicator (RI) source bits in the uplink control information to get M groups of ACK/NACK source bits and/or RI source bits, with each group in the M groups corresponding to a codeword, where M is a total number of codewords;
   performing channel coding on the ACK/NACK source bits and/or RI source bits of each codeword in the codewords to obtain $Q_{ACK}*L_i$ output bits, where $Q_{ACK}$ is channel coding output bits corresponding to each layer in a certain codeword, L is a total number of layers of the codewords, and the layer number corresponding to the $i^{th}$ codeword is $L_i$; and
   multiplexing and interleaving the output bits corresponding to each codeword in the codewords and data bits of the corresponding codeword.

2. The method as claimed in claim 1, which is **characterized in that** a certain coding scheme is determined in accordance with the bit number of the ACK/NACK source bits and/or RI source bits of each codeword in the codewords; and the ACK/NACK source bits and/or RI source bits are coded in accordance with the determined coding scheme.

3. The method as claimed in claim 2, which is **characterized in that**

   if the bit number of the ACK/NACK source bits and/or RI source bits is smaller than A, such source bits are coded by replication after one or more placeholder bits are inserted to obtain $Q_{ACK}$ output bits;
   if the bit number of the ACK/NACK source bits and/or RI source bits is greater than or equal to A and smaller than or equal to B, a RM (32, O) code is adopted for doing the channel coding; if $Q_{ACK}>32$, then the coded bits are replicated in cycle to obtain $Q_{ACK}$ output bits; or,
   if the bit number of the ACK/NACK source bits and/or RI source bits is greater than B, an RM code is adopted for the grouped source bits for doing the channel coding to obtain $Q_{ACK}$ output bits,
   where A<B, both A and B are positive integers.

4. The method as claimed in claim 3, which is **characterized in that** the $Q_{ACK}$ output bits are replicated in accordance with the layer number $L_i$ mapped by a current codeword to obtain output bits corresponding to all layers in the current codeword.

5. The method as claimed in claim 4, which is **characterized in that** if data modulation scheme in the current codeword is $Q_m$, the output bits are replicated by taking $Q_m$ bits as a unit; or,
   $Q_{ACK}$ output bits are replicated directly without reference to data modulation scheme in the current codeword.

6. The method as claimed in claim 2, which is **characterized in that**

   if the bit number of the ACK/NACK source bits and/or RI source bits is smaller than A, such source bits are coded by replication after one or more placeholder bits are inserted to obtain $Q_{ACK}*L_i$ output bits;
   if the bit number of the ACK/NACK source bits and/or RI source bits is greater than or equal to A and smaller than or equal to B, a RM (32, O) code is adopted for doing the channel coding, and if $Q_{ACK}*L_i >32$, the coded bits are replicated in cycle to obtain $Q_{ACK}*L_i$ output bits; or,
   if the bit number of the ACK/NACK source bits and/or RI source bits is greater than B, an RM code is adopted for the grouped source bits for doing the channel coding to obtain $Q_{ACK}*L_i$ output bits,
   where A<B, both A and B are positive integers.

7. A method for processing UCI based on a MIMO system, which is **characterized by** comprising:

   replicating ACK/NACK source bits and/or RI source bits to get L groups of ACK/NACK source bits and/or RI source bits, with each group in the L groups corresponding to a layer, where L is a total number of layers;
   performing channel coding on the ACK/NACK source bits and/or RI source bits of each layer in the layers to obtain $Q_{ACK}$ output bits; and
multiplexing and interleaving the output bits corresponding to each layer in the layers and data bits of the corresponding layer.

8.  The method as claimed in claim 7, which is **characterized in that** a certain coding scheme is determined in accordance with the bit number of ACK/NACK source bits and/or RI source bits of each codeword in the codewords; and the ACK/NACK source bits and/or RI source bits are coded in accordance with the determined coding scheme.

9.  The method as claimed in claim 8, which is **characterized in that**

if the bit number of the ACK/NACK source bits and/or RI source bits is smaller than A, such source bits are coded by replication after one or more placeholder bits are inserted to obtain $Q_{ACK}$ output bits;
if the bit number of the ACK/NACK source bits and/or RI source bits is greater than or equal to A and smaller than or equal to B, a RM (32, O) code is adopted for doing the channel coding; and if $Q_{ACK}>32$, then the coded bits are replicated in cycle to obtain $Q_{ACK}$ output bits; or,
if the bit number of the ACK/NACK source bits and/or RI source bits is greater than B, an RM code is adopted for the grouped source bits for doing the channel coding to obtain $Q_{ACK}$ output bits,
where A<B, both A and B are positive integers.

10. An apparatus for processing UCI based on a MIMO system, which is **characterized by** comprising:

a replication module, for replicating ACK/NACK source bits and/or RI source bits in the uplink control information to get M groups of ACK/NACK source bits and/or RI source bits, with each group in the M groups corresponding to a codeword, where M is a total number of codewords and M is a positive integer;
a channel coding module, for performing channel coding on the ACK/NACK source bits and/or RI source bits of each codeword in the codewords to obtain $Q_{ACK}*L_i$ output bits, where $Q_{ACK}$ is channel coding output bits corresponding to each layer in a certain codeword, L is a total number of layers of the codewords, and the layer number corresponding to the $i^{th}$ codeword is $L_i$; and
a processing module, for multiplexing and interleaving the output bits corresponding to each codeword in the codewords and data bits of the corresponding codeword.

11. The apparatus as claimed in claim 10, which is **characterized in that** the channel coding module comprises:

a module for determining a certain coding scheme in accordance with the bit number of ACK/NACK source bits and/or RI source bits of each codeword in the codewords; and
a coding module, for coding the ACK/NACK source bits and/or RI source bits in accordance with the determined coding scheme.

12. The apparatus as claimed in claim 11, which is **characterized in that**

if the bit number of the ACK/NACK source bits and/or RI source bits is smaller than A, such source bits are coded by replication after one or more placeholder bits are inserted to obtain $Q_{ACK}$ output bits;
if the bit number of the ACK/NACK source bits and/or RI source bits is greater than or equal to A and smaller than or equal to B, a RM (32, O) code is adopted for doing the channel coding; and if $Q_{ACK}>32$, then the coded bits are replicated in cycle to obtain $Q_{ACK}$ output bits; or,
if the bit number of the ACK/NACK source bits and/or RI source bits is greater than B, the channel coding module adopts an RM code for the grouped source bits for doing the channel coding to obtain $Q_{ACK}$ output bits;
where A<B, both A and B are positive integers.

13. The apparatus as claimed in claim 12, which is **characterized in that** the channel coding module replicates the $Q_{ACK}$ output bits in accordance with the layer number $L_i$ mapped by a current codeword to obtain output bits corresponding to all layers in the current codeword.

14. The apparatus as claimed in claim 13, which is **characterized in that** if data modulation scheme in the current codeword is $Q_m$, the channel coding module replicates the output bits by taking $Q_m$ bits as a unit; or replicates the $Q_{ACK}$ output bits directly without reference to data modulation scheme in the current codeword.

15. The apparatus as claimed in claim 11, which is **characterized in that**

if the bit number of the ACK/NACK source bits and/or RI source bits is smaller than A, the channel coding module encodes such source bits by replication after one or more placeholder bits are inserted to obtain $Q_{ACK}*L_i$ output bits;

if the bit number of the ACK/NACK source bits and/or RI source bits is greater than or equal to A and smaller than or equal to B, the channel coding module adopts a RM (32, O) code to code channels, and if $Q_{ACK}*L_i>32$, the coded bits are replicated in cycle to obtain $Q_{ACK}*L_i$ output bits, where A<B, both A and B are positive integers; or,

if the bit number of the ACK/NACK source bits and/or RI source bits is greater than B, the channel coding module adopts an RM code for the grouped source bits for doing the channel coding to obtain $Q_{ACK}*L_i$ output bits.

16. An apparatus for processing UCI based on a MIMO system, which is **characterized by** comprising:

a replication module, for replicating ACK/NACK source bits and/or RI source bits to get L groups of ACK/NACK source bits and/or RI source bits, with each group in the L groups corresponding to a layer, where L is a total number of layers;

a channel coding module, for performing channel coding on the ACK/NACK source bits and/or RI source bits of each layer in the layers to obtain $Q_{ACK}$ output bits; and

a processing module, for multiplexing and interleaving the output bits corresponding to each layer in the layers and data bits of the corresponding layer.

17. The apparatus as claimed in claim 16, which is **characterized in that** the channel coding module comprises:

a module for determining coding schemes, for determining a certain coding scheme in accordance with the bit number of ACK/NACK source bits and/or RI source bits of each codeword in the codewords; and

a coding module, for coding the ACK/NACK source bits and/or RI source bits in accordance with the determined coding scheme.

18. The apparatus as claimed in claim 17, which is **characterized in that**

if the bit number of the ACK/NACK source bits and/or RI source bits is smaller than A, the channel coding module encodes such source bits by replication after one or more placeholder bits are inserted to obtain $Q_{ACK}$ output bits;

if the bit number of the ACK/NACK source bits and/or RI source bits is greater than or equal to A and smaller than or equal to B, the channel coding module adopts an RM (32, O) code to code channels; and if $Q_{ACK}>32$, then the coded bits are replicated in cycle to obtain $Q_{ACK}$ output bits, where A<B, both A and B are positive integers; or,

if the bit number of the ACK/NACK source bits and/or RI source bits is greater than B, the channel coding module adopts an RM code for the grouped source bits for doing the channel coding to obtain $Q_{ACK}$ output bits.

Figure 1

Figure 2

replicating ACK/NACK source bits and/or RI source bits in the uplink control information to get M groups of the ACK/NACK source bits and/or RI source bits, with each group in the M groups corresponding to a codeword

S302

performing channel coding on the ACK/NACK source bits and/or RI source bits of each codeword in the codewords to obtain $Q_{ACK}*L_i$ output bits

S304

multiplexing and interleaving the output bits corresponding to each codeword in the codewords and data bits of the corresponding codeword

S306

Figure 3

replicating ACK/NACK source bits and/or RI source bits to get L groups of the ACK/NACK source bits and/or RI source bits, with each group in the L groups corresponding to a layer

S402

performing channel coding on the ACK/NACK source bits and/or RI source bits of each layer in the layers to obtain $Q_{ACK}$ output bits

S404

multiplexing and interleaving the output bits corresponding to each layer in the layers and data bits of the corresponding layer

S406

Figure 4

Figure 5

Figure 6